(19) Europäisches Patentamt

European Patent Office

Office européen des brevets

(11) **EP 0 957 590 A1**

(12) **DEMANDE DE BREVET EUROPEEN**

(43) Date de publication:
**17.11.1999 Bulletin 1999/46**

(51) Int Cl.6: **H04B 1/52**, H01P 1/213

(21) Numéro de dépôt: **99401147.6**

(22) Date de dépôt: **10.05.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **15.05.1998 FR 9806201**

(71) Demandeur: **ALCATEL**
**75008 Paris (FR)**

(72) Inventeurs:
• **Caille, Gérard**
  **31170 Tournefeuille (FR)**
• **Pinte, Béatrice**
  **31670 Labege (FR)**
• **Graffeuil, Jacques**
  **31520 Ramonville (FR)**
• **Tartarin, Jean-Guy**
  **31130 Quint-Fonsegrives (FR)**
• **Parra, Thierry**
  **31400 Toulouse (FR)**

(74) Mandataire: **Smith, Bradford Lee et al**
**COMPAGNIE FINANCIERE ALCATEL**
**Dépt. Propr. Industrielle,**
**30, avenue Kléber**
**75116 Paris (FR)**

(54) **Circuit et procédé de réception ou d'émission d'ondes hyperfréquences**

(57)    L'invention est relative à un circuit de réception (ou d'émission) d'ondes hyperfréquences comprenant un moyen rayonnant (144) pour la réception (ou l'émission), des moyens de filtrage pour éliminer des ondes hyperfréquences émises (ou reçues) à des fréquences différentes, par le moyen rayonnant, et des moyens amplificateurs des ondes reçues (ou émises).

Le circuit comporte un premier (ou dernier) étage (150, 152 ; 182, 184) connecté au moyen rayonnant comprenant, d'une part, un filtre planaire (150 ; 182) dont le taux de réjection des fréquences d'émission (ou de réception) est limité à une fraction, de préférence une faible part, de la réjection totale nécessaire pour éliminer les fréquences d'émission (ou de réception), et, d'autre part, un amplificateur (152 ; 184) dont le gain est également une fraction du gain total du circuit. De préférence, le filtre planaire du premier (ou dernier) étage est connecté directement au moyen rayonnant.

Le bruit vu par le moyen rayonnant est minimisé.

FIG_5

## Description

L'invention est relative à un circuit et à un procédé de réception et/ou d'émission d'ondes hyperfréquences.

Des circuits d'émission et de réception sont utilisés couramment dans les systèmes de télécommunication. Ces circuits sont habituellement destinés à émettre des puissances importantes et recevoir des puissances faibles. Il en est ainsi, par exemple, des systèmes de télécommunication dans lesquels les signaux sont relayés par des satellites géostationnaires.

Dans ces systèmes, les fréquences d'émission et les fréquences de réception sont distinctes pour éviter que les signaux de réception ne soient perturbés par les signaux d'émission. Il est, en outre, nécessaire de prévoir des moyens de filtrage pour que, dans chaque voie, on puisse recevoir ou émettre la fréquence désirée et éliminer la fréquence de l'autre voie. La séparation entre les signaux doit être particulièrement soignée quand l'émission et la réception sont simultanées.

Dans ces systèmes, on prévoit, le plus souvent, une source en guide d'onde et un duplexeur à haute réjection dans les bandes respectives d'émission et de réception, ainsi que des circuits à guides d'ondes. Ils présentent donc un encombrement important qui ne peut convenir pour toutes les applications, notamment pour les terminaux de systèmes de télécommunication dans lesquels chaque abonné doit disposer d'un émetteur et d'un récepteur.

En particulier, les circuits d'émission et de réception à ondes hyperfréquences peuvent être utilisés de façon courante, pour des usages tant domestiques que professionnels, dans des systèmes de télécommunication par satellites.

Par exemple, des systèmes de télécommunication de ce type sont développés pour des applications dites "multimédia". Dans ces systèmes, on prévoit une constellation de satellites à orbites basses, d'altitude comprise entre 800 à 1500 km, ou moyennes, d'altitude comprise entre 6000 et 12000 km. Les orbites sont dites "basses ou moyennes" par opposition à des satellites géostationnaires dont l'altitude est de 36000 km. Les satellites ont pour but d'assurer une communication entre utilisateurs terrestres. Les communications ainsi transmises sont de nature multimédia, c'est-à-dire qu'elles concernent des signaux de télévision, des signaux audio, vidéo, des données numériques de toute nature, des programmes, des signaux téléphoniques ou de télécopie. Par rapport à des communications relayées par des satellites géostationnaires, la basse altitude des satellites réduit la distance de communication et donc les retards dus à la propagation, ce qui facilite l'interactivité de ces systèmes. En outre, avec des constellations, on peut optimiser la couverture par exemple en privilégiant les zones à forte densité de population, alors qu'une orbite géostationnaire privilégie les zones proches de l'équateur.

Un utilisateur terrestre ne peut communiquer avec un satellite que pendant le temps au cours duquel ce satellite est "en vue" de l'utilisateur ; cette durée est en général de l'ordre d'une vingtaine de minutes. Il est donc nécessaire que, d'une part, l'antenne de l'utilisateur puisse suivre le satellite sur sa trajectoire et, d'autre part, l'utilisateur puisse commuter instantanément la communication sur le satellite suivant, qui entre dans son champ de vision, alors que le satellite précédent est en train de quitter son champ de vision. La commutation instantanée est surtout nécessaire pour des communications interactives pour lesquelles une interruption du service, même de courte durée, n'est pas envisageable. Pour résoudre ce problème, on prévoit en général un dispositif d'émission et de réception à deux antennes dont l'une se déplace pour suivre le satellite avec lequel l'utilisateur communique et l'autre est en attente et pointée vers le début de la zone de vision du satellite suivant.

Les dispositifs d'émission et de réception et, notamment leurs antennes et les circuits associés, destinés à de tels systèmes de télécommunication doivent être particulièrement légers et de dimensions réduites pour faciliter le déplacement et l'installation sur le toit d'un immeuble (notamment une maison individuelle) et, ainsi, ménager l'esthétique.

En outre, il peut être avantageux d'associer les deux dispositifs d'émission et de réception et des circuits associés à une lentille de focalisation commune. Dans ce cas, ces deux dispositifs et leurs circuits doivent coexister dans un espace limité, ce qui renforce la nécessité de faible encombrement et de faible poids de ces dispositifs et circuits.

Dans ces conditions, il est difficilement envisageable de faire appel à la technologie des guides d'ondes qui est lourde et encombrante. On fait donc appel à une technologie planaire dont la plus courante est appelée "micro ruban". Mais avec cette technologie, les solutions connues au problème d'isolation entre l'émission et la réception entraînent des pertes importantes qui dégradent la qualité de liaison ou obligent à surdimensionner l'antenne. Tel est le cas dans le dispositif décrit dans le document EP 0 744 831.

Or, il est nécessaire de prévoir un filtrage à fort taux d'atténuation (ou forte réjection) pour, dans la bande de réception, éliminer les fréquences d'émission, et, de façon analogue, dans la bande d'émission, éliminer les fréquences de réception. Mais, des filtres à taux de réjection élevé et faible bruit sont difficiles à réaliser en technologie planaire.

L'invention remédie à cet inconvénient.

Elle permet une réalisation simple et à faible bruit de circuits d'émission et/ou de réception hyperfréquences en technologie planaire, avec une excellente isolation entre les circuits d'émission et de réception.

Le circuit d'émission et de réception d'ondes hyperfréquences conforme à l'invention est caractérisé en ce que le circuit de réception comporte au moins deux étages de filtrage et d'amplification connectés au moyen rayonnant et comprenant respectivement, d'une part, un filtre planaire dont le taux de réjection des fréquences d'émission est limité à une fraction, de préférence une faible part, de la réjection totale nécessaire pour éliminer les fréquences d'émission, et, d'autre part, un amplificateur dont le gain est également une fraction du gain total du circuit, lesdits étage de filtrage et d'amplification permettant d'effectuer un filtrage et une amplification progressifs.

Le taux de réjection du filtre de cet étage est, de préférence, choisi de façon telle que l'amplificateur ne soit pas délinéarisé par les signaux d'émission résiduels.

Le complément de réjection est apporté par au moins un autre étage à filtre planaire et amplificateur.

Au niveau du dispositif rayonnant, le bruit apporté par le filtrage est principalement fonction du bruit apporté par le premier filtre connecté à ce dispositif rayonnant, le bruit apporté par l'autre (ou les autres) filtre(s) étant négligeable en pratique, car il est diminué en proportion du gain des amplificateurs séparant cet autre filtre du dispositif rayonnant.

Ainsi, le taux de réjection du premier filtre étant modéré, le bruit est également modéré.

Un filtre à taux de réjection modéré peut être réalisé de façon plus simple et moins onéreuse qu'un filtre à fort taux de réjection.

En particulier, on peut faire appel à des substrats peu onéreux tels que des substrats à matrice en matière organique souple telle que le PTFE, alors que les filtres à fort taux de réjection nécessitent en général des substrats en alumine.

Il est préférable que le circuit d'émission soit réalisé de manière analogue, c'est-à-dire avec au moins deux étages connectés au dispositif rayonnant comprenant respectivement, d'une part, un filtre planaire dont le taux de réjection des fréquences de réception est égal à une fraction (de préférence une faible part) du taux de réjection nécessaire pour éliminer les fréquences de réception et, d'autre part, un amplificateur dont le gain ne représente qu'une fraction (de préférence une faible part) du gain total du circuit.

On notera ici que par "technologie planaire", on entend une technologie par laquelle les éléments sont réalisés sous forme plane. On utilisera notamment la technique dite "micro ruban". Dans ce cas, on fait appel à un substrat d'épaisseur 0,5 à 2 mm dont le plan de masse inférieur est collé sur le fond d'un boîtier métallique. On peut également faire appel à la technique dite de "triplaque suspendue". Dans ce cas, on utilise un substrat d'épaisseur 0,15 à 0,5 mm dont la face inférieure non métallisée est coincée entre deux demi coquilles métalliques. Avec cette technique, l'énergie hyperfréquence se propage en majeure partie dans l'air au-dessus et au-dessous du substrat, ce qui induit des pertes plus faibles que dans le cas de la technique micro ruban. Par contre, les dimensions des circuits sont plus importantes.

Pour la réalisation de circuits, ces deux techniques sont pratiquement identiques, seule la constante diélectrique effective $\varepsilon_e$ pouvant être différente. Il en résulte que la longueur d'onde peut aussi être différente, étant donné que cette longueur d'onde est liée à la constante diélectrique effective $\varepsilon_e$ par la formule suivante :

$$\lambda = \frac{c}{f.\sqrt{\varepsilon e}} \ ,$$

formule dans laquelle c est la vitesse de la lumière, et f la fréquence.

D'autres caractéristiques et avantages de l'invention apparaîtront avec la description de certains de ses modes de réalisation, celle-ci étant effectuée en se référant aux dessins ci-annexés sur lesquels :

la figure 1 est un schéma montrant l'utilisation d'un dispositif d'émission et de réception selon l'invention dans un système de télécommunication par satellites défilants,
la figure 2 est un schéma d'une antenne comprenant deux dispositifs d'émission et de réception selon l'invention, cette antenne étant utilisée également dans un système de télécommunication par satellites,
la figure 3 est un schéma d'une partie de dispositif d'émission et de réception conforme à l'invention,
les figures 3a et 3b sont des schémas analogues à celui de la figure 3, mais pour des variantes,
la figure 4 est un schéma en coupe d'un dispositif et circuit d'émission et de réception conforme à l'invention,
la figure 5 est un schéma des circuits d'émission et de réception conformes à l'invention, et
la figure 6 représente un exemple de réalisation de circuits de réception.

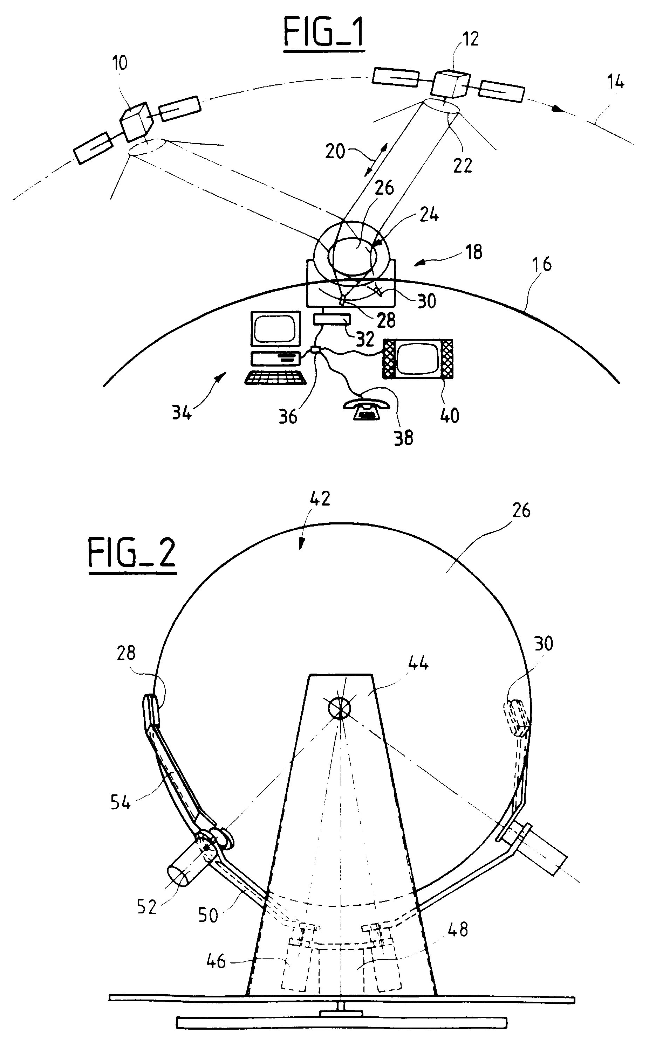

Dans le système de télécommunication représenté sur la figure 1, un ensemble de satellites 10, 12 circule sur une orbite 14 à une altitude d'environ 1000 à 1500 km au-dessus de la surface 16 de la terre. Chaque satellite comporte des moyens d'émission et de réception pour relayer une communication entre des usagers terrestres et des stations d'accès à des services spécifiques, tels que des banques de données. On a ainsi représenté sur la figure 1 un terminal 18 d'usager qui établit une communication interactive avec un autre usager ou une station terrestre (non représentée) par l'intermédiaire du satellite 12. Le caractère interactif de communication est symbolisé par une double flèche 20 sur le chemin des ondes électromagnétiques entre l'antenne 22 du satellite 12 et l'antenne 24 de l'abonné 18.

L'antenne 24 est, par exemple, disposée sur le toit d'une maison individuelle. Elle comporte une surface focalisante 26, par exemple sphérique, comme représenté sur la figure 2, et deux éléments rayonnants 28 et 30 mobiles sur la surface focale 26 de l'antenne 24.

L'élément rayonnant 28 est commandé pour suivre le satellite 12 avec lequel l'usager est en vue, tandis que l'élément rayonnant 30 est dans une position d'attente. Ce dernier reste pointé vers la zone d'apparition du satellite suivant. En effet, quand le satellite 12 quitte le champ de vision de l'antenne et que le satellite suivant entre dans ce champ de vision, l'élément rayonnant 30 remplace l'élément 28 utilisé pour effectuer la communication. La commutation de l'élément 28 à l'élément 30 peut s'effectuer de façon instantanée.

Dans l'exemple représenté sur la figure 1, on prévoit chez l'usager 18, un dispositif 32 permettant de suivre les satellites, de commander l'émission et la réception des signaux et, éventuellement, de décrypter ces signaux. Ce dispositif de commande est relié à un micro-ordinateur 34 ou organe analogue à mémoire dans laquelle sont enregistrées des informations se rapportant aux positions des satellites, de façon qu'à chaque instant on puisse commander les moteurs assurant le déplacement des éléments rayonnants 28 et 30 afin que ceux-ci soient pointés de façon précise vers les satellites.

Si on utilise un micro-ordinateur, celui-ci peut également être utilisé pour recevoir ou émettre des programmes.

Dans cet exemple d'application multimédia, on prévoit, en outre, de connecter, par l'intermédiaire d'un connecteur ou répartiteur 36, une ligne 38 téléphonique ou de télécopie et un récepteur 40 d'émissions de télévision ou de radiophonie.

On a représenté sur la figure 2 un exemple plus détaillé d'antenne 24 avec des éléments rayonnants 28 et 30. Dans cette réalisation, on prévoit une lentille fixe 42 permettant de recevoir un rayonnement hyperfréquence sur un angle solide de valeur suffisante pour collecter les signaux des satellites défilant dans la zone de vision de l'utilisateur. Cette lentille focalise les rayonnements reçus sur une surface sphérique sur laquelle se déplacent les éléments rayonnants 28 et 30. Cette lentille 42 est supportée par deux montants dont un seul, de référence 44, est visible sur la figure 2.

Les éléments rayonnants 28 et 30 sont déplaçables sur la surface sphérique 26 de focalisation. A cet effet, on prévoit deux moteurs et deux bras pour chacun de ces éléments. Pour simplifier, on ne décrira que les moteurs et les bras de l'élément rayonnant 28.

Pour déplacer l'élément rayonnant 28, on prévoit un premier moteur 46 solidaire d'un support inférieur 48 et dont l'arbre permet de faire tourner un bras 50 à l'extrémité duquel se trouve le second moteur 52 entraînant lui-même un avant-bras 54 à l'extrémité duquel se trouve l'élément rayonnant 28. Pour assurer le déplacement de l'élément rayonnant 28, les moteurs 46 et 52 sont commandés par des informations fournies par le micro-ordinateur 34 ou analogue.

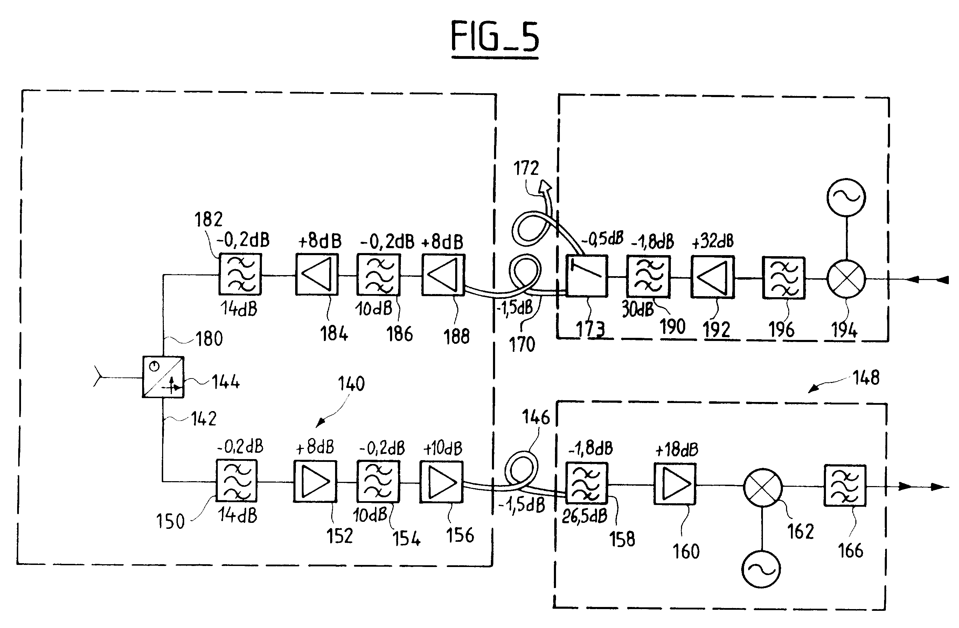

A chaque élément rayonnant 28, 30 sont associés un circuit d'émission et un circuit de réception qui seront décrits plus loin en relation avec la figure 5.

Les terminaux 18 étant des appareils de grande diffusion, il est essentiel qu'ils soient de faible encombrement, de faible poids et d'un coût minimisé. La nécessité d'un faible encombrement et d'un faible poids est renforcée encore par le fait que les dispositifs d'émission et de réception sont mobiles et sont associés dans un volume réduit, celui de l'antenne 24.

Cette minimisation d'encombrement, de poids et de prix doit être compatible avec des performances élevées nécessitées par, notamment le haut débit de l'information et la simultanéité de l'émission et de la réception. De ce point de vue, l'isolation entre les signaux d'émission et de réception présente un problème difficile à résoudre, surtout dans le contexte, mentionné plus haut, de faible encombrement et de faible prix.

Dans l'exemple, la bande de réception Rx est de 11,7 à 12,45 GHz (pouvant être étendue à 12,55 GHz), tandis que la bande d'émission Tx est de 14 à 14,3 GHz. La puissance d'émission est de quelques watts, de l'ordre de 2 à 3.

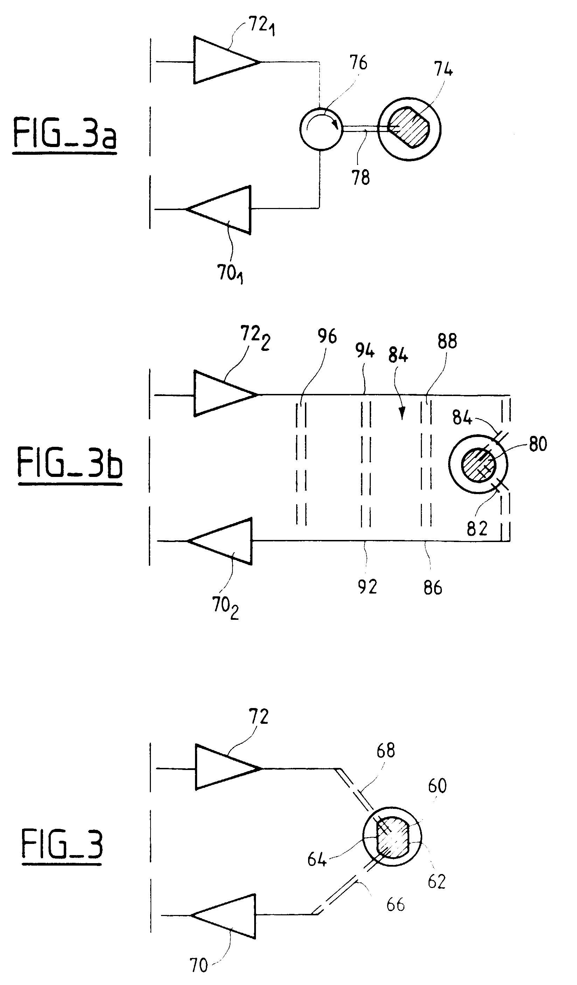

L'élément rayonnant selon l'invention est du type planaire. Il comprend, dans l'exemple représenté sur la figure 3, une pastille ou "patch" 60 (figure 3) ayant la forme d'un cercle tronqué par des chanfreins parallèles 62 et 64. A cette pastille 60 sont associés deux accès 66 et 68 en lignes micro ruban formant un angle de 90°. Ces deux accès 66 et 68 sont excités par des signaux déphasés de 90°. L'accès 66 correspond à la réception et est donc relié, notamment, à un amplificateur 70 à faible bruit, tandis que l'accès 68 correspond à l'émission et est donc relié, entre autres, à un amplificateur de puissance 72.

L'excitation des lignes 66 et 68 par des signaux déphasés de 90° permet d'obtenir des signaux d'émission et de réception qui sont à polarisations circulaires en sens inverses. Les polarisations orthogonales des signaux d'émission et de réception, ajoutées aux bandes de fréquences distinctes de ces signaux, permettent une isolation de l'ordre de 20 dB entre ces signaux. La technologie planaire utilisée pour réaliser l'élément rayonnant minimise son coût, son encombrement et son poids. En outre, la réalisation à deux accès directs minimise le nombre de composants et permet de se passer de coupleur hybride à large bande ou de circulateur comme dans les variantes représentées sur la figure 3a (utilisation d'un circulateur) et sur la figure 3b (utilisation d'un coupleur hybride).

Dans l'exemple représenté sur la figure 3a, on prévoit une pastille plane circulaire tronquée 74 présentant un accès relié à la sortie de l'amplificateur de puissance $72_1$ (circuit d'émission) par l'intermédiaire d'un circulateur 76. L'accès 78 est également relié à la voie de réception, c'est-à-dire à un amplificateur faible bruit $70_1$, par l'intermédiaire du même circulateur 76. Bien que cette réalisation soit moins avantageuse sur le plan de l'encombrement et du coût, elle présente l'avantage d'être simple à réaliser.

Dans l'exemple de la figure 3b, on prévoit un élément rayonnant planaire 80 de forme circulaire non tronquée présentant deux accès 82 et 84 orthogonaux reliés à deux bornes, respectivement 86 et 88, d'un coupleur hybride 90 comportant deux autres bornes, respectivement 92 et 94. La borne 92 est connectée à l'entrée d'un amplificateur faible bruit $70_2$, et la borne 94 est reliée à la sortie de l'amplificateur de puissance $72_2$. Le coupleur hybride 90° permet de transformer des polarisations linéaires orthogonales, sur ses bornes 92 et 94, en des polarisations circulaires en sens inverses sur ses bornes 86 et 88. Ainsi, sur les accès 82 et 84, les signaux présentent des polarisations circulaires de sens inverses. Le coupleur hybride 90 est de préférence du type large bande. A cet effet, on prévoit une ou plusieurs branches supplémentaires 96 en micro ruban.

Bien que, par rapport au mode de réalisation représenté sur la figure 3, cette variante implique un volume plus important, elle présente toutefois l'avantage de permettre un fonctionnement sûr et une isolation très satisfaisante entre les signaux d'émission et de réception.

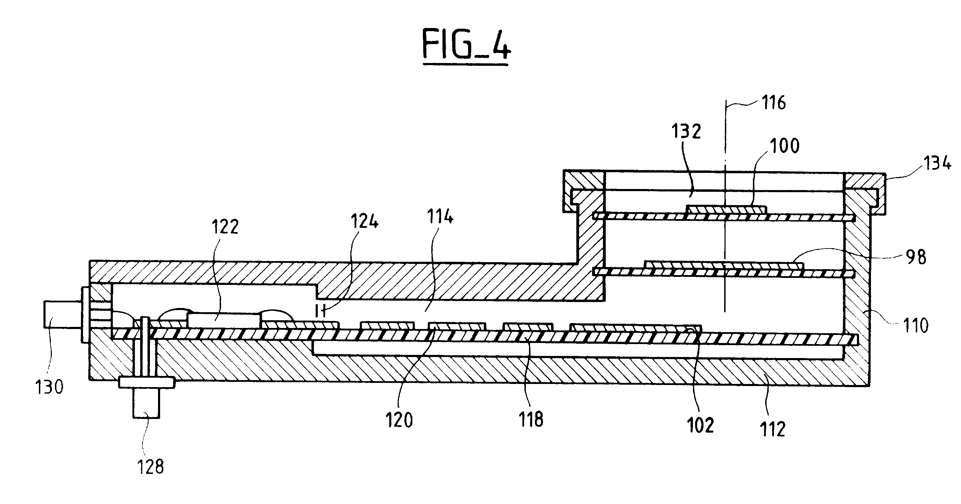

On va maintenant décrire en relation avec la figure 4 un mode de réalisation de dispositif d'émission et de réception à pastille planaire pouvant être utilisé de préférence avec le mode de réalisation de la figure 3. Il peut aussi être utilisé avec les variantes des figures 3a et 3b.

Dans cet exemple, on prévoit deux pastilles planaires superposées, respectivement 98 et 100. Chacune de ces pastilles a une forme correspondant à celle représentée sur la figure 3, c'est-à-dire la forme d'un cercle chanfreiné. Toutefois, les dimensions de ces pastilles sont différentes. L'une d'elles, la pastille inférieure 98, présente des dimensions correspondant à une résonance dans la bande de réception et la pastille supérieure a des dimensions plus faibles correspondant à une résonance dans la bande d'émission (les plus hautes fréquences).

Les deux pastilles présentent une disposition relative telle qu'elles présentent le même axe central (perpendiculaire à leurs plans) et que leurs chanfreins sont parallèles.

Les accès 102 sont disposés sous la pastille inférieure 98. Sur la figure 4 un seul accès est visible. Ces accès sont en ligne micro ruban ou triplaque suspendue. Ils sont connectés aux circuits de filtrage et aux amplificateurs faible bruit ou de puissance par l'intermédiaire de lignes micro ruban ou triplaques. Dans l'exemple, les moyens de filtrage et d'adaptation sont également en ligne micro ruban ou triplaque.

Les pastilles ainsi que les accès sont disposés dans une cavité cylindrique 110 ouverte vers le haut et présentant un fond 112.

Cette cavité 110 limite le cône d'émission et de réception des ondes hyperfréquences afin que ce cône soit relativement étroit, dirigé vers le satellite 12.

Le fond de la cavité est relié à un canal 114 d'axe perpendiculaire à l'axe 116 de la cavité cylindrique 110. Dans ce canal est disposé un substrat 118 portant, d'une part, les lignes d'accès 102 et, d'autre part, des circuits de filtrage et d'adaptation en lignes micro rubans ou triplaques 120. Le substrat comporte aussi, à l'extrémité du canal 114 opposée à la cavité 110, des éléments actifs tels que des transistors 122 d'amplificateur(s). La partie d'extrémité du canal 114 comportant les transistors 122 en technique planaire micro ruban est séparée des circuits 120, de préférence en technique planaire triplaque suspendue, par l'intermédiaire d'une paroi d'étanchéité 124.

L'extrémité du canal 114 comprend une borne 128 pour les signaux de réception et une borne 130 pour les signaux d'émission.

L'ouverture supérieure 132 de la cavité 110 est fermée par un capot protecteur 134 en matière plastique telle que du "téflon" ou de l'ABS.

En variante (non représentée), les accès sont sur l'une des pastilles, par exemple celle de référence 98.

Il est également possible de prévoir une seule pastille avec des accès sur cette pastille ou à distance de cette dernière.

On va maintenant décrire en relation avec la figure 5, un circuit de filtrage et d'amplification conforme à l'invention qui permet de minimiser le bruit, notamment celui engendré par le filtrage tout en permettant de diminuer le coût de réalisation des circuits. En outre, les pertes sont minimisées.

L'émission et la réception étant effectuées simultanément, l'élimination, par filtrage, des fréquences d'émission dans les circuits de réception ainsi que l'élimination, par filtrage, des fréquences de réception, dans les circuits d'émission doivent être particulièrement efficaces.

A cet effet, on prévoit, selon l'invention, dans chaque circuit, des filtres planaires et une amplification et un filtrage à plusieurs étages. L'atténuation, ou réjection, du filtre qui est le plus proche de l'élément rayonnant présente une valeur qui est une fraction de l'atténuation nécessaire pour éliminer les fréquences à supprimer. Dans un exemple, le taux de réjection total nécessaire pour éliminer les fréquences d'émission (ou de réception) est de l'ordre de 50 dB et la réjection du filtre du premier (ou dernier) étage n'est que de l'ordre de 14 dB. Cette dernière valeur est calculée en fonction du point de compression du premier transistor (amplificateur) en réception (ou du facteur de bruit du dernier transistor, amplificateur, en émission), de la puissance à émettre, ou de l'isolation entre les deux ports de la source (élément rayonnant).

L'amplification apportée par le premier étage d'amplification représente aussi une fraction du gain total.

De cette manière, le bruit vu par l'élément rayonnant est minimisé. En effet, ce bruit dépend surtout du bruit apporté par l'étage d'amplification et le filtre les plus proches de cet élément. Par contre, le bruit apporté à l'élément rayonnant par les étages plus éloignés d'amplification et de filtrage n'interviennent que de façon atténuée, car ce bruit est diminué en proportion du gain des étages d'amplification intermédiaires se trouvant entre l'élément rayonnant et le filtre générateur de bruit.

En outre, les filtres planaires à réjection modérée peuvent être réalisés de façon aisée, à coût modéré, car les substrats utilisés peuvent être d'un bas prix de revient. On sait, en effet, qu'un filtrage en technique micro ruban planaire (ou triplaque suspendue) nécessite, pour des taux de réjection élevés, des substrats en alumine relativement onéreux, alors que pour des taux de réjection plus faibles, on peut utiliser des substrats meilleur marché, par exemple à base de PTFE, comme on le verra plus loin.

Dans l'exemple représenté sur la figure 5, le circuit de réception comprend une première partie 140 disposée entre l'accès 142 de la pastille 144 de l'élément rayonnant et une extrémité d'un câble 146. Une seconde partie 148 est disposée entre l'autre extrémité du câble 146 et le démodulateur (non représenté) du circuit de réception.

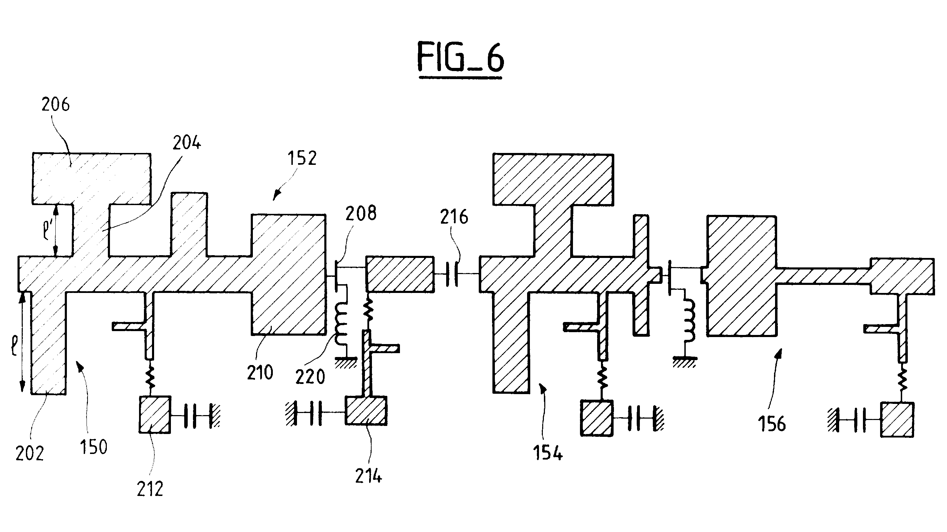

L'accès 142 est connecté directement à l'entrée d'un premier filtre 150 du type passe bande pour les fréquences de réception et du type coupe bande pour les fréquences d'émission. Pour ces fréquences d'émission, il présente une caractéristique de réjection relativement modérée, 14 dB. Pour la fréquence de réception, l'atténuation (ou perte) est de faible valeur, de l'ordre de 0,2 dB. Ce premier filtre 150 est relié à l'entrée d'un premier étage amplificateur 152, à un seul transistor dans l'exemple. Cet amplificateur 152 présente un gain de 8 dB dans l'exemple. Il est à noter que ce gain de 8 dB n'est pas le gain maximal qu'on pourrait obtenir avec un transistor. Mais, dans l'exemple, on minimise le bruit au léger détriment du gain, comme on le verra plus loin en relation avec la figure 6.

Cette première partie 140 du circuit de réception comporte aussi un deuxième couple filtre-étage d'amplification, à savoir un filtre 154 dont l'entrée est reliée à la sortie du premier amplificateur 152 et un deuxième amplificateur 156 constitué aussi, dans l'exemple, par un seul transistor. Le filtre 154 présente une réjection de 10 dB pour les fréquences d'émission et une légère réjection, 0,2 dB, pour les fréquences de réception. L'étage 156 d'amplification présente un gain de 10 dB.

Dans cet exemple, le signal d'émission parasite à la sortie de l'étage 156 est inférieur à 10 dBm.

Le câble 146 - qui, dans l'exemple, introduit une atténuation de 1,5 dB - est relié à la seconde partie 148 de filtrage et d'amplification qui comprend un troisième couple filtre 158-amplificateur 160. Le filtre 158 reçoit le signal fourni par le câble 146 et délivre un signal au troisième amplificateur 160. L'atténuation du filtre 158 pour les fréquences d'émission est de 26,5 dB et l'atténuation pour les fréquences de réception, de 1,8 dB. L'étage d'amplification 160 présente deux transistors et son gain est de 18 dB.

A la sortie de l'étage 160, on obtient un signal complètement filtré des signaux parasites d'émission. Cette sortie est reliée, de façon classique, à un mélangeur 162 recevant sur une autre entrée un signal d'oscillateur local à 10,75 GHz. La sortie du mélangeur 162 est reliée au démodulateur de réception par l'intermédiaire d'un filtre passe-bas 166.

L'atténuation des fréquences parasites qui est effectuée par chacun des filtres est accordée au gain de l'amplificateur associé de façon telle que cette atténuation soit suffisante pour empêcher la délinéarisation, ou saturation (ou compression), du (des) transistor(s) de l'amplificateur par le signal parasite d'émission. Il est donc nécessaire que chaque filtre soit disposé en amont de l'amplificateur associé. Par "en amont", on entend ici que le filtre doit être plus proche de l'élément rayonnant que l'amplificateur du même couple.

Le facteur de bruit global du circuit de réception est, pour l'essentiel, celui du premier étage de filtrage 150 et d'amplification 152.

Le câble coaxial 146, ainsi que les câbles coaxiaux correspondants 170 et 172 pour le circuit d'émission, forme, dans l'exemple, une boucle autour des moteurs qui peut s'enrouler ou se relâcher selon le déplacement des bras.

La seconde partie 148 du circuit de réception (ainsi que la partie correspondante du circuit d'émission) se trouve, dans l'exemple, à la base de l'antenne, c'est-à-dire à proximité du socle 48 (figure 2).

La première partie 142 du circuit de réception est réalisée en technologie dite "hybride sans réglage", c'est-à-dire que les éléments actifs tels que les transistors sont déposés directement sur un substrat, sans boîtier, et que le substrat présente des conducteurs planaires, par exemple réalisés par photogravure. Cette réalisation permet de minimiser encore plus le facteur de bruit, c'est-à-dire de maximiser le rapport signal à bruit. Le poids et l'encombrement sont aussi minimisés.

Par contre, la partie du circuit 148 se trouvant au pied de l'antenne, qui est plus éloignée de l'élément rayonnant, peut être réalisée de façon plus classique en technologie intégrée telle que la technologie dite "MMIC" ("Microwave monolithic integrated circuit", c'est-à-dire circuit intégré monolithique hyperfréquences). En effet, comme on l'a déjà indiqué, le bruit introduit par cet étage 148 intervient peu dans le facteur de bruit global. De même, les pertes du filtre 158 de taux de réjection plus élevé (26,5 dB dans l'exemple), qui évite la compression ou la délinéarisation des transistors de l'étage 160, interviennent aussi de façon moins critique que pour la partie 140.

Dans la partie 140, les substrats sont, par exemple, des substrats RO 3006 ou RO 4003 distribués par la Société Rogers Corporation. Ils sont constitués par une matrice en matière organique souple telle que le PTFE (polytétrafluoréthylène) renforcée par des micro fibres de verre et dans laquelle sont noyées des particules de céramique permettant d'augmenter la constante diélectrique et donc de diminuer la taille des circuits. Ce substrat est recouvert, d'un côté, par une couche de cuivre qui constitue la masse, tandis que l'autre côté est également recouvert de cuivre photogravable pour réaliser les circuits.

Le circuit d'émission est analogue au circuit de réception. L'accès 180 d'émission de la pastille 144 est relié à la sortie d'un premier filtre 182 dont l'entrée est connectée à la sortie d'un étage d'amplification 184. L'atténuation du filtre 182 est de 14 dB pour les fréquences de réception et de 0,2 dB pour les fréquences d'émission. Le gain de l'amplificateur 184 est de 8 dB.

L'entrée de l'amplificateur 184 est reliée à la sortie d'un filtre 186 recevant le signal de sortie d'un étage d'amplification 188. L'atténuation du filtre 186 est de 10 dB pour les fréquences de réception et de 0,2 dB pour les fréquences d'émission. Le gain de l'étage d'amplification 188 est de 8 dB.

L'autre partie du circuit d'émission se trouve également au pied de l'antenne, au voisinage du support 48 (figure 2), et comporte un filtre 190 relié au câble 170 ou 172 par l'intermédiaire d'un commutateur 173. Le filtre 190 reçoit le signal de sortie d'un étage d'amplification 192 à quatre transistors. L'atténuation du filtre 190 est de 30 dB pour les fréquences de réception et de 1,8 dB pour les fréquences d'émission. Le gain de l'amplificateur 192 est de 32 dB.

L'entrée de l'amplificateur 192 est reliée à la sortie d'un mélangeur 194 par l'intermédiaire d'un filtre 196. Le mélangeur présente deux entrées qui, de façon classique, sont reliées d'une part, au modulateur d'émission (non montré), et d'autre part, à un oscillateur local d'émission à 13,05 GHz.

Pour ce circuit d'émission, l'avantage de la division en étages est que le dernier étage, directement connecté à l'accès 180, présente des faibles pertes du fait du faible taux de réjection du filtre 182 et du relativement faible gain de l'étage 184.

Le câble 172 est connecté aux circuits associés au deuxième élément rayonnant (non montré). Autrement dit, la partie du circuit d'émission à commutateur 173, filtre 190, amplificateur 192, filtre 196 et mélangeur 194 est commune aux deux éléments rayonnants. Par contre, les autres parties du circuit sont individuelles à chaque élément rayonnant.

On a représenté sur la figure 6 un exemple de réalisation particulièrement simple et efficace de la première partie 140 de circuit de réception. La première partie (182, 184, 186, 188) du circuit d'émission peut être réalisée de façon analogue ; on ne la décrira donc pas en détail.

Une caractéristique importante de cette réalisation est celle des filtres 150 et 154.

On sait que ces filtres doivent présenter des caractéristiques passe-bande à faible perte pour les fréquences de réception, et de coupe-bande à forte atténuation pour les fréquences d'émission.

Chacun de ces filtres comprend au moins un élément conducteur planaire, formé par une gravure qui, dans l'exemple, est transversale à la gravure 200 de propagation du courant. On voit ainsi que le filtre 150 comporte une première gravure métallique rectangulaire allongée 202 perpendiculaire à la gravure métallique 200, et se termine en circuit ouvert classique. Le filtre 150 comporte aussi une seconde gravure 204 ou stub en dérivation sur la ligne 200. Ce stub 204 se termine par un "pseudo court-circuit", ce court-circuit étant simulé par un large tronçon capacitif 206. Dans ce dernier cas, on évite ainsi une connexion avec la masse par trou(s) métallisé(s).

Le stub 202 se terminant en circuit ouvert doit présenter une longueur l telle qu'il présente à sa jonction avec la ligne principale 200 un circuit ouvert pour les fréquences d'émission et un court-circuit pour les fréquences de réception.

Cette longueur l doit être un multiple de $\lambda/2$ pour les longueurs d'onde $\lambda$ correspondant aux fréquences de réception et un multiple de $\lambda/4$ pour les longueurs d'onde correspondant aux fréquences d'émission.

Pour atteindre cet objectif, la longueur 1 est choisie à une valeur de $\lambda_{d/4}$, $\lambda_d$ étant une longueur d'onde correspondant à une fréquence $f_d$ égale à la différence $f_t$ - $f_r$ entre deux fréquences $f_t$ et $f_r$, $f_t$ étant une fréquence de la bande d'émission et $f_r$ une fréquence de la bande de réception. Les fréquences $f_d$, $f_t$ et $f_r$ sont, en outre, choisies pour satisfaire aux relations suivantes :

$$f_t = (2m+1)f_d$$

$$f_r = 2mf_d.$$

Dans ces formules, m est un nombre entier positif.

De cette manière, la longueur 1 est un multiple de $\lambda/4$ pour les fréquences d'émission et est un multiple de $\lambda/2$ pour les fréquences de réception. Dans ces conditions, l'élément 202 constitue un court-circuit pour les fréquences de réception et un circuit ouvert pour les fréquences d'émission.

Le stub 204, terminé par le large tronçon capacitif 206 simulant un court-circuit à la jonction 204-206, doit présenter une longueur 1' choisie de façon telle que l'élément constitue un court-circuit pour les fréquences d'émission et un circuit ouvert pour les fréquences de réception. On choisira une longueur l' de $\lambda_{d/4}$, $\lambda_d$ correspondant à une fréquence $f_d = f_t$ - $f_r$, avec :

$$f_t = 2mf_d,$$

et

$$f_r = (2m - 1)f_d.$$

Quel que soit le mode de réalisation, on obtient bien le résultat recherché, à savoir la forte atténuation des fréquences d'émission et la transmission sans perturbation des fréquences de réception.

Dans l'exemple pour lequel la bande Rx est de 11,7 à 12,45 GHz et la bande Tx est de 14 à 14,3 GHz, dans le cas du stub 204 terminé par un pseudo court-circuit, on peut choisir les fréquences $f_r$, $f_t$ et $f_d$ de valeurs suivantes :

$$f_r = 11,75 \text{ GHz}$$

$$f_t = 14,1 \text{ GHz}$$

$$f_d = f_t - f_r = 2,35 \text{ GHz}$$

$$f_r = 5f_d, \text{ et } f_t = 6f_d.$$

Pour l'élément 202 terminé en circuit ouvert, on choisira, au contraire, des fréquences $f_r$, $f_t$ et $f_d$, telles que $f_r$ soit un multiple pair de $f_d$ et $f_t$ un multiple impair de $f_d$.

Il est à noter qu'on peut utiliser soit l'élément de filtrage 202 seul, sans l'élément de filtrage 204-206, soit l'élément de filtrage 204-206 seul, sans l'élément 202, soit, enfin, comme représenté, les deux éléments de filtrage simultanément.

L'étage amplificateur 152 comporte un transistor 208 ainsi que des gravures pour l'adaptation d'impédance et la polarisation des électrodes. Le transistor 208 est, dans l'exemple, un transistor de type FHX13X de la marque Fujitsu. Sa grille est reliée à la ligne 200 par l'intermédiaire d'une gravure rectangulaire 210. Les polarisations sont appliquées à des gravures de formes carrées, 212 pour la polarisation de grille et 214 pour la polarisation de drain.

L'étage 152 est relié à l'étage de filtrage 154 par l'intermédiaire d'un condensateur 216 d'adaptation et de découplage entre les tensions de polarisation sur les plots 212 et 214.

La source du transistor 208 est reliée à la masse par l'intermédiaire d'une inductance 220, jouant le rôle d'une contre-réaction et constituée par un ruban ou fil de câblage ou connexion. La valeur de cette inductance 220 est optimisée de façon à minimiser le bruit. On a constaté que cette minimisation du bruit peut entraîner une diminution du gain ; mais cette diminution est faible et n'altère pas les performances d'amplification.

## Revendications

1.   Circuit de réception (ou d'émission) d'ondes hyperfréquences comprenant un moyen rayonnant (60 ; 74 ; 80 ; 144) pour la réception (ou l'émission), des moyens de filtrage pour éliminer des ondes hyperfréquences émises (ou reçues) à des fréquences différentes, par le moyen rayonnant, et des moyens amplificateurs des ondes reçues (ou émises), caractérisé en ce qu'il comporte au moins deux étages de filtrage et d'amplification (150, 152, 158, 160 ; 182, 184, 190, 192) connectés au moyen rayonnant et comprenant respectivement, d'une part, un filtre planaire (150, 158 ; 182, 190) dont le taux de réjection des fréquences d'émission (ou de réception) est limité à une fraction, de préférence une faible part, de la réjection totale nécessaire pour éliminer les fréquences d'émission (ou de réception), et, d'autre part, un amplificateur (152, 160 ; 184, 192) dont le gain est également une fraction du gain total du circuit, lesdits étage de filtrage et d'amplification permettant d'effectuer un filtrage et une amplification progressifs.

2.   Circuit selon la revendication 1, caractérisé en ce que le filtre planaire (150 ;182) du premier (ou dernier) étage (150, 152 ;182, 184) est connecté directement au moyen rayonnant.

3.   Circuit selon la revendication 1 ou 2, caractérisé en ce que le taux d'atténuation du filtre (150 ;1821 du premier (ou dernier) étage (150, 152 ;182, 184) et le gain de l'amplificateur (152 ;184) de cet étage ont des valeurs telles que l'amplificateur ne soit pas délinéarisé par les signaux d'émission (ou de réception) résiduels non éliminés par le filtre associé.

4.   Circuit selon l'une quelconque des revendications 1 à 3, caractérisé en ce que le taux de réjection total nécessaire pour éliminer les fréquences d'émission (ou de réception) étant de l'ordre de 50 dB, la réjection du filtre (150 ;182) du premier (ou dernier) étage (150, 152 ;182, 184) est de l'ordre de 14 dB.

5.   Circuit selon l'une quelconque des revendications précédentes, caractérisé en ce que l'amplificateur (152 ;184) du premier (ou dernier) étage (150, 152 ; 182, 184) comprenant au moins un transistor, cet étage est sous forme hybride, le transistor comprenant une pastille semiconductrice dépourvue de boîtier et disposée sur le substrat sur lequel est réalisé le filtre planaire.

6.   Circuit selon la revendication 5, caractérisé en ce que l'étage (158, 160 ; 190, 192), qui est le plus éloigné du moyen rayonnant, est réalisé sous forme de circuit intégré, par exemple en technologie MMIC.

**7.** Circuit selon la revendication 6, caractérisé en ce que le moyen rayonnant étant mobile, le premier (ou dernier) étage (150, 152 ; 182, 184) est également mobile et l'étage réalisé sous forme de circuit intégré est immobile.

**8.** Circuit selon l'une quelconque des revendications précédentes, caractérisé en ce que le substrat pour le filtre planaire (150 ; 182) du premier (ou dernier) étage (150, 152 ; 182, 184) est à matrice en matière organique souple telle que le PTFE.

**9.** Circuit selon la revendication 8, caractérisé en ce que le substrat comporte des fibres de verre de renforcement mécanique et un remplissage diélectrique tel que de la céramique.

**10.** Circuit selon l'une quelconque des revendications précédentes, caractérisé en ce qu'il comporte trois étages (150, 152, 154, 156, 158, 160 ; 182, 184, 186, 188, 190, 192) de filtrage et d'amplification, le taux d'atténuation du filtre (158 ; 190) le plus éloigné du moyen rayonnant présentant une valeur plus élevée que le taux d'atténuation des filtres des deux autres étages.

**11.** Circuit selon les revendications 5 et 10, caractérisé en ce que l'étage intermédiaire (152, 154 ; 186, 188) de filtrage et d'amplification est sous forme hybride à transistor comprenant une pastille semiconductrice dépourvue de boîtier disposée sur le substrat sur lequel est réalisé le filtre planaire.

**12.** Circuit selon la revendication 11, caractérisé en ce que l'étage intermédiaire et le premier (ou dernier) étage (150, 152 ; 182, 184) sont réalisés sur un même substrat.

**13.** Circuit selon l'une quelconque des revendications précédentes, caractérisé en ce que l'amplificateur (152 ; 184) du premier (ou dernier) étage (150, 152 ; 182, 184) comporte un transistor (208) à effet de champ et en ce qu'un fil de connexion (220) avec la source forme une inductance de contre-réaction avec une valeur choisie pour minimiser le bruit.

**14.** Circuit selon l'une quelconque des revendications précédentes, caractérisé en ce que les fréquences de réception sont dans la bande 11,7 à 12,55 GHz et les fréquences d'émission dans la bande 14 à 14,3 GHz.

**15.** Circuit selon l'une quelconque des revendications précédentes, caractérisé en ce que les ondes d'émission et réception sont à polarisations orthogonales, notamment à polarisations circulaires en sens inverses.

**16.** Circuit selon l'une quelconque des revendications précédentes, caractérisé en ce que le filtre planaire est réalisé en technique micro ruban ou en technique triplaque suspendue.

**17.** Application du circuit selon l'une quelconque des revendications précédentes à un terminal de système de télécommunication dans lequel le terminal est terrestre et comprend un circuit d'émission et de réception destiné à communiquer avec un autre terminal terrestre, ou une station fournissant des services, par l'intermédiaire d'un satellite défilant.

**18.** Procédé de réception (ou d'émission) d'ondes hyperfréquences par un moyen rayonnant, dans lequel on élimine par filtrage des ondes hyperfréquences émises (ou reçues), à des fréquences différentes, par le moyen rayonnant et on amplifie les ondes reçues (ou à émettre), caractérisé en ce qu'on effectue le filtrage et l'amplification de façon progressive, le premier (ou dernier) filtrage effectué à partir du moyen rayonnant faisant appel à un filtre planaire fournissant une réjection limitée à une faible part de celle nécessaire pour éliminer, tout au long de la chaîne correspondante, les fréquences d'émission (ou de réception), et en ce que le gain d'amplification de cet étage est aussi une faible part du gain total nécessaire.

**19.** Procédé selon la revendication 18, caractérisé en ce que la réjection du premier (ou dernier) filtrage est déterminée en fonction du point de compression de l'amplificateur (152 ; 184) du premier étage (150, 152 ; 182, 184) (ou du facteur de bruit du dernier étage d'amplification), de la puissance à émettre et de l'isolation entre les deux ports du moyen rayonnant.

## FIG_1

## FIG_2

FIG_3a

FIG_3b

FIG_3

# FIG_4

EP 0 957 590 A1

FIG_5

EP 0 957 590 A1

# FIG_6

Office européen
des brevets

**RAPPORT DE RECHERCHE EUROPEENNE**

Numéro de la demande

EP 99 40 1147

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X<br><br>A | EP 0 744 831 A (MATSUSHITA ELECTRIC IND CO LTD) 27 novembre 1996 (1996-11-27)<br>* abrégé *<br><br>* figure 21 *<br>* page 14, ligne 54 - page 15, ligne 10 *<br>* figure 1 *<br>* page 8, ligne 56 - page 9, ligne 35 *<br>--- | 1-4,14, 16,18,19<br>5,8,10, 13,15,17 | H04B1/52<br>H01P1/213 |
| A | EP 0 506 122 A (MATSUSHITA ELECTRIC IND CO LTD) 30 septembre 1992 (1992-09-30)<br><br>* abrégé *<br>* colonne 15, ligne 22 - colonne 16, ligne 46 *<br>* colonne 19, ligne 54 - colonne 20, ligne 30 *<br>* figure 1B *<br>* figure 8 *<br><br>----- | 1,5,8, 10-13, 16,18 | |

**DOMAINES TECHNIQUES RECHERCHES (Int.Cl.6)**

H04B
H01P
H05K

Le présent rapport a été établi pour toutes les revendications

| Lieu de la recherche | Date d'achèvement de la recherche | Examinateur |
|---|---|---|
| LA HAYE | 30 juillet 1999 | Lindhardt, U |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 1147

La présente annexe indique les membres de la famille de brevets relatifs aux documents brevets cités dans le rapport de recherche européenne visé ci-dessus.
Lesdits membres sont contenus au fichier informatique de l'Officeeuropéen des brevets à la date du
Les renseignements fournis sont donnés à titre indicatif et n'engagent pas la responsabilité de l'Office européen des brevets.

30-07-1999

| Document brevet cité au rapport de recherche | | Date de publication | Membre(s) de la famille de brevet(s) | | Date de publication |
|---|---|---|---|---|---|
| EP 0744831 | A | 27-11-1996 | JP | 8316873 A | 29-11-1996 |
| | | | JP | 8321738 A | 03-12-1996 |
| | | | JP | 8330845 A | 13-12-1996 |
| | | | JP | 9008627 A | 10-01-1997 |
| EP 0506122 | A | 30-09-1992 | JP | 2719067 B | 25-02-1998 |
| | | | JP | 5095236 A | 16-04-1993 |

EPO FORM P0460